Europäisches Patentamt

European Patent Office

Office européen des brevets

(11) Publication number: **0 169 231**

**B1**

# EUROPEAN PATENT SPECIFICATION

(45) Date of publication of patent specification: **06.06.90**

(51) Int. Cl.⁵: **B 29 C 45/48, B 29 C 45/63**

(21) Application number: **85900776.7**

(22) Date of filing: **10.01.85**

(86) International application number:
**PCT/NL85/00002**

(87) International publication number:
**WO 85/03027 18.07.85 Gazette 85/16**

(54) **METHOD OF AND APPARATUS FOR INJECTION MOULDING OF PVC PRODUCTS.**

(30) Priority: **10.01.84 NL 8400082**

(43) Date of publication of application:
**29.01.86 Bulletin 86/05**

(45) Publication of the grant of the patent:
**06.06.90 Bulletin 90/23**

(84) Designated Contracting States:
**AT BE CH DE FR GB LI LU NL SE**

(73) Proprietor: **WAVIN B.V.**
**Händellaan 251**
**NL-8031 EM Zwolle (NL)**

(72) Inventor: **LOMAN, Henricus, Gerardus, Maria**
**43, Aadorpweg**
**NL-7641 EK Wierden (NL)**

(74) Representative: **Keyser, Johannes Maurits L. F.**
**EXTERPATENT Willem Witsenplein 4**
**NL-2596 BK The Hague (NL)**

(56) References cited:
DE-A-2 735 990
DE-A-3 024 948
FR-A-1 493 244
FR-A-2 134 549
FR-A-2 159 533
FR-A-2 205 406

H. DOMININGHAUS "Die Kunststoffe und ihre
Eigenschaften", VDI-Verlag 1976, page 105
H. KOPSCH "Kalandertechnik", C. Hanser-Verlag
1978, pages 48-58

Courier Press, Leamington Spa, England.

## Description

The invention relates to a method of injecting moulding plastic products employing an injection moulding machine of a two-stage cascade type having an upper plasticizing screw extruder unit and a lower reciprocating injection screw unit having one screw and in which the plasticized material is subjected to a vacuum while introducing it to the lower injection unit.

Such a method is known from FR—A—1493244. This method is quite satisfactory when manufacturing plastic products of various materials like polyethylene, polypropylene and polystyrene, which are supplied to the plasticizing unit (also called pre-treatment unit) in form of pellets. In the pretreatment unit a certain plasticizing effect on the pellets will be obtained. In this condition the pellets are transferred to the injection unit where the material is heated further and transformed into a molten mass of an appropriate temperature. Intermittently the screw moves backward in order to obtain a sufficient amount of molten material which is then injected into the mould by a certain axial movement of the screw towards the injection nozzle. Subjecting the material to a vacuum serves to avoid that, while the plasticized pellets in the injection unit are being compressed into a homogeneous molten mass, air would be trapped.

The known method creates problems, however, when PVC products are to be manufactured from powdered raw material. In the past PVC was supplied in form of pellets. This has a negative influence on the product quality because the material has already once gone through a production process. Moreover it requires additional stabilizers and is more expensive, so that presently the industry prefers raw PVC in powdered form.

PVC powder contains quite an amount of air, and removing this from the material in the screw is very difficult. When, in accordance with the disclosure of the above mentioned French Patent Application, vacuum is applied, this vacuum will penetrate into the internal space of the pretreatment unit. This is no harm as long as the raw material will leave this unit in an agglomerated form. But when the raw material is dry-blend powder as it is with PVC, not only the air within the pretreatment unit will be sucked away towards the vacuum source, but the dry powder will be taken along with the air unless it has actually started to plasticize. This is a reason not only to apply no more than a moderate vacuum but also to make the temperature in the pretreatment unit rise quite rapidly to a rather high value, in order to make the powder at least somewhat sticky as soon as possible.

By an insufficient removal of gas and air—either by a lower vacuum or for other reasons—such gas and air will be included in pores which will be closed during plasticizing, consequently these closed pores will also be present in the injection-moulded product. Moreover because of the inclusions of air, the plasticized material is homogenized less well, so that locally the temperature of the molten mass will be increased too far and decomposition of the PVC will occur as a consequence of the small stability of PVC at higher temperatures.

PVC can only stand high melting temperatures by virtue of the addition of stabilizers. The stabilizers will decompose at high temperatures and the process will have to be dimensioned such that, at the end, they have just disappeared. The higher the temperature, the more stabilizer will be required, but this again affects the product quality considerably. On the other hand any stay at high temperature in the absence of a stabilizer will result in what is called "burning" of the PVC. This is not a compound with oxygen but a decomposition which will result in the creation of carbon and of hydrochloric acid. An insufficient degree of homogenity of the material will therefore result not only in the presence locally of such black spots in the product, but the HCl is damaging to the moulds and may seriously pollute the atmosphere in the workshop.

The consequence of these problems, sketched here only very summarily, is that the quality of products moulded by injection when one would try to do so according to the method disclosed in the above mentioned French Patent Application, from PVC powder, would be often open to criticism, both as regards the mechanical properties and as regards the appearance. More precisely speaking: they would be foamy and it would be extremely difficult to prevent at least locally decomposition. All these problems would furthermore constitute a serious limitation upon the speed of production.

This is all the more of importance now that, in recent time, it turned out to be possible, by various measures, to reduce the cooling time in the moulds of injection-moulded products in general, but particularly the cooling time for tube fittings moulded from PVC powder, so that also the cycle time is reduced. In order to be able to utilize the advantage of this to a full extent, the plasticizing capacity of the injection moulding machine should be proportionally increased, because in less time the same amount of material for each "shot" has to be plasticized.

Generally speaking, for increasing the capacity of the injection unit various solutions are feasible.

One option is to increase of the number of revolutions of the screw. Particularly with PVC this has the disadvantage that the risk of burning of the material is increased. In practice, the circumferential speed of the screw is limited to a certain maximum value. Above this value friction between the screw and the material becomes too high an locally burning will occur.

Another option is to supply more material to the screw by greater depth of the thread. The increased cross-sectional area makes heat transfer more difficult. This will inevitably result in a lesser degree of homogeneity of the temperature in the material.

Both options imply an increased energy input per unit time into the material. The part of the energy required to prepare the material in the pretreatment unit which is not supplied by the heating elements surrounding the housing must be transmitted from the screw house. In practice often meets with problems because the power of the drive is limited. The result is that, in such case, the material is plasticized insufficiently and that lack of homogeneity will occur.

The object of the invention, therefore, is to obviate the problems sketched above when applying the method known from FR—A—100493244, to injection moulding of PVC products from powdered raw material.

To this end, the method according to the invention is characterized in that the plastic products are PVC products made from powdered raw material, the powdered raw material being subjected to a prejellifying treatment during forced transportation of the powdered raw material through the upper plasticizing screw extruder unit which is of the double-screw type in which unit the raw material is heated and brought up to an agglomerated state.

As a result of the prejellifying treatment during forced transportation, which is being done by a plasticizing unit of the double-screw type, it is impossible for the vacuum to penetrate into the pretreatment unit. Such a double-screw feeder is closed completely by its interengaging threads so that, even in the extreme situation in which there is no material in it at all, a vacuum can be kept at its output end. This is in contrast to the situation during transport by means of a single screw which remains an open connection. When therefore, as a result of the invention, there is no risk any more for dry powder to be drawn away, the average temperature in the pre-treatment unit can be kept lower, therefore the raw material is not completely jellified but only prejellified, which implies that the material is already densified on micro-scale, whilst on macro-scale a coarse material structure remains. In other words: the prejellified material will not have any closed pores (as could be the case according to the prior art) but only open pores.

Therefore the temperature of the material in the pretreatment unit need not be as high as it should be according to the known art. According to the invention it turned out that good results can be obtained when, during the prejellifying, the material is heated to about 140°C.

Therefore, when the prejellified material leaves the pre-treatment unit, any gas and air can still be fully removed before it enters the injection unit. Removal of the gas from the material is still improved further because there is no reason any more to limit the level of vacuum in view of preventing sucking away of dry material from the pretreatment unit. Therefore one may apply such a vacuum that the absolute pressure is less than 50 kPa, and preferably even less than 20 kPa, so that not mainly a removal of humidify from the raw material is realised, but also a removal of between half and more than 80% of the amount of air and gas present in the agglomerated mass.

Naturally the invention also relates to an apparatus for performing the method. In accordance with the above mentioned French Publication the existence of such an apparatus is taken for granted which includes an injection moulding machine of a two-stage cascade type having an upper plasticizing screw extruder unit, provided with heating means, and a lower reciprocating injection screw unit, the latter unit comprising a cylindrical housing, also provided with heating means, and in which one screw is situated which reciprocates in axial direction, and having a filling opening at the rear, there being provided means for guiding the material exiting from the upper plasticizing unit towards the filling opening of the lower injection unit through an interconnecting space which is closed with respect to the atmosphere and which is provided with a vacuum connection.

According to the invention such apparatus is characterized in that for making PVC products from powdered raw material the pre-treatment unit is a screw feeder of the double-screw type.

The invention will now be clarified with reference to the accompanying drawings of an exemplary embodiment of the apparatus.

Figure 1 shows diagrammatically a vertical section through the apparatus according to the broken line I—I of Figure 3.

Figure 2 is a top view, partially section according to line II—II in Figure 1.

Figure 3 is a view, seen according to arrow III in Figure 1.

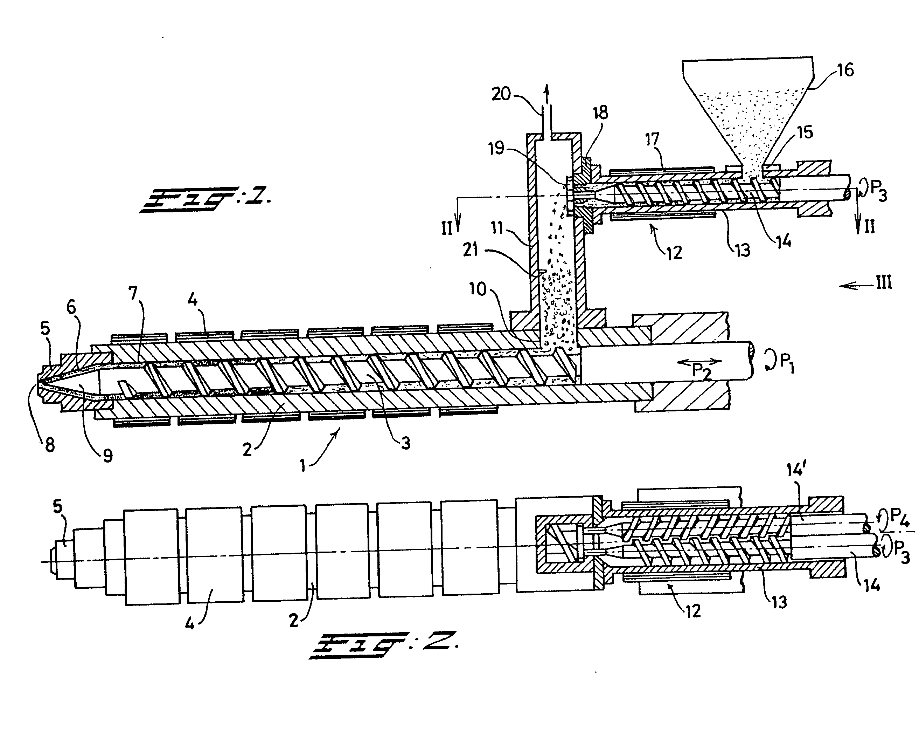

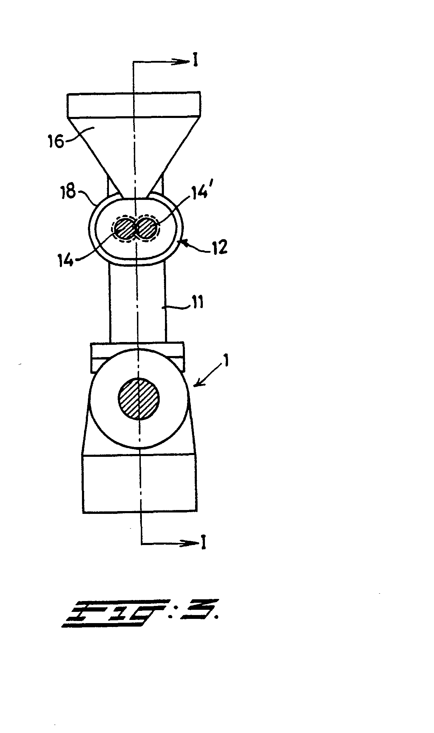

In known manner the injection unit, indicated as a whole by 1, comprises a cylindrical housing 2 in which a screw 3 is situated. Around the housing heating elements 4 are provided. The front end of housing 2 is provided with an injection nozzle 5. The latter has a substantially conical cavity 6 constituting a transition between the greater diameter of the internal space 7 of housing 2 and the smaller diameter of the aperture 8, with which the injection nozzle is connected to the mould. The pointed end 9 of screw 3 is also substantially conical, corresponding with the shape of cavity 6.

By means of a combined drive, not represented, the screw 3 is both rotatable, indicated by the arrow P1 and lengthwise movable, indicated by P2.

Near the rear end, housing 2 is provided with a filling opening 10, through which raw materials are supplied to the space between the screw thread. These raw materials are heated under the influence of frictional forces caused by the rotating screw and heating by the elements 4, and are thereby plasticized and consequently compressed and fed forwardly by the rotation of the screw.

On the housing at the location of the filling opening 10, a chamber 11 has been provided, the internal space of which matches the filling opening. To this filling chamber 11 raw material is supplied from the pretreatment unit 12. The latter comprises a screw feeder 13 of the double-screw type. This is a device known per se, in which two screws 14, 14' are provided in the housing which has a cross section in shape of an eight, where the threads of two screws interengage. The screws 14, 14' are rotated according to the arrows P3 and P4 by a drive not represented. Material situated in such a double screw can take a much higher pressure difference between feed and discharge side. The screw feeder 13 presents a filling opening 15 above which there is a hopper 16 containing the PVC powder to be worked up.

Around double-screw feeder 13 a heating device 17 is provided. Screw feeder 13 is connected to chamber 11 while inserting a dye plate 18 having a passage which is narrowed as compared with the free passage of the screw feeder. At the side of dyeplate 18 which is situated within chamber 11, a plurality of rotary blades 19 is provided, moving past the apertures in die plate 18. Chamber 11 is provided at its top with a vacuum connection 20 and at an appropriate level between the output of screw feeder 13 at the location of the apertures in the die plate and the filling opening 10 of the injection unit 1 a level sensor 21 is provided.

The operation of the apparatus is as follows.

In double-screw feeder 13 the powdered PVC coming from the hopper is transported forwardly by the continuous rotation of screws 14, 14'. Thereby it is heated relatively fast. The overall dimensions are such that a certain agglomeration of the powder will take place, but that the material will not melt so much that closed pores will be produced.

An appropriate maximum temperature of the PVC in the screw feeder is about 140°C.

The agglomerated raw material at the output end of the screw feeder is cut into pellets by the rotary blades 19, and these pellets are collected near the bottom of chamber 11 by the opening 10 of the injection unit. By the vacuum in chamber 11 a considerable portion of the air, which is initially present in the pellets, will be removed. Through the filling opening 10 the pellets will reach, in a manner which is known per se, the internal space between the threads of the injection screw. Subsequently, under the influence of frictional forces, caused by the rotary screw and while being heated by the external heating elements, the material is transported forwardly. As a matter of course the material which, in this way, finds itself in the injection screw, is still under the influence of the vacuum in chamber 11, so that the air, once removed, will anyhow not be replaced by other air, although in practice the process of removal of air will probably still go a little further.

In order to obtain a good removal of the air from the raw material, a vacuum has to be applied such that the absolute pressure will certainly be lowered to less than half the atmospheric pressure, so to below 50 kPa. According to the invention, however, preferably an absolute pressure at the location of the vacuum connection 20 of chamber 11 is applied which amounts to about 20 kPa or less.

Heating the material in the injection unit 1, into a consistence appropriate for injection moulding, is produced by mixing action, preheating and the agglomeration in the prejellifying unit 12, with such a degree of uniformity that, even when the frequency of the strokes of the injection screw, so the cycle time of injection moulding is doubled, also the overall temperature of the molten mass at the location of the injection nozzle can be increased somewhat. This is reached mainly by the improved homogeneity in the distribution of temperature in the material. In view of the not ideal uniformity up to now, it was unavoidable that the temperature was kept at a value of 210±10°C. When applying the invention a value of 220±10°C can be kept.

The apparatus can be adjusted such that the working speed of the prejellifying unit 12 is somewhat higher than that which corresponds with the capacity of the injection unit 1. In that case, when sensor 21 detects that a sufficient supply of prejellified raw material is present in front of the filling opening 10, a control signal can be deduced by which the speed of operation of the prejellifying unit 12 is lowered. So it will keep rotating. In this way a possible cause of lesser quality is obviated.

## Claims

1. The method of injection moulding plastic products employing an injection moulding machine of a two-stage cascade type having an upper plasticizing screw extruder unit and a lower reciprocating injection screw unit having one screw and in which the plasticized material is subjected to a vacuum while introducing it to the lower injection unit, characterized in that the plastic products are PVC products made from powdered raw materials, the powdered raw material being subjected to a prejellifying treatment during forced transportation of the powdered raw material through the upper plasticizing screw extruder unit, which is of the double screw type, and in which unit the raw material is heated and brought to an agglomerated state.

2. Method according to claim 1, characterized that during the prejellifying the material is heated to about 140°C.

3. Method according to claim 1 or 2, characterized in that the vacuum applied while introducing the prejellified material into the filling opening of the injection unit has a value down to an absolute pressure of less than 50 kPa.

4. Method according to claim 3, characterized in that an absolute pressure is applied of less than 20 kPa.

5. Apparatus for injection moulding plastics products for performing the method according to any of claims 1 to 4, including an injection moulding machine of a two-stage cascade type having as a pre-treatment unit (12), an upper plasticizing screw extruder unit (13), provided with heating means (17), and a lower reciprocating injection screw unit (1), the latter unit comprising a cylindrical housing (2), also provided with heating means (4), and in which one screw (3) is situated which reciprocates in axial direction, and having a filling opening (10) at the rear, there being provided means (11) for guiding the material exiting from the upper plasticizing unit (13) towards the filling opening (10) of the lower injection unit (1) through an interconnecting space (11) which is closed with respect to the atmosphere and which is provided with a vacuum connection (20), characterized in that, for making PVC products from powdered raw material, the pre-treatment unit (12) is a screw extruder (13) of the double-screw type.

## Patentansprüche

1. Verfahren zum Spritzgießen von Kunststoffprodukten unter Vewendung einer Spritzgießmaschine eines zweistufigen Kaskadentyps mit einer oberen Plastifizierungsschneckenextrudereinheit und einer unteren, hin- und hergehenden Einspritzschneckeneinheit, die eine Schnecke aufweist und in der das plastifizierte Material einem Unterdruck ausgesetzt wird, während es in die untere Einspritzeinheit eingespeist wird, dadurch gekennzeichnet, daß die Kunststoffprodukte aus pulverförmigen Rohmaterialien hergestellte PVC-Produkte sind und daß das pulverförmige Rohmaterial einer Vorgelierbehandlung während einer Zwangsförderung des pulverförmigen Rohmaterials durch die obere Plastifizierungsschneckenextrudereinheit, die ein Doppelschneckentyp ist, unterzogen wird, in welcher Einheit das Rohmaterial erwärmt und in einen agglomerierten Zustand gebracht wird.

2. Verfahren nach Anspruch 1, dadurch gekennzeichnet, daß das Material während des Vorgelierens auf etwa 140°C erwärmt wird.

3. Verfahren nach Anspruch 1 oder 2, dadurch gekennzeichnet, daß der während des Einspeisens des vorgelierten Materials in die Füllöffnung der Einspritzeinheit angewandte Unterdruck einen auf einen absoluten Druck von weniger als 50 kPa herabgesetzten Wert besitzt.

4. Verfahren nach Anspruch 3, dadurch gekennzeichnet, daß ein absoluter Druck von weniger als 20 kPa angewandt wird.

5. Vorrichtung zum Spritzgießen von Kunststoffprodukten zur Durchführung des Verfahrens nach einem der Ansprüche 1 bis 4, mit einer Spritzgießmaschine eines zweistufigen Kaskadentyps mit einer Vorbehandlungseinheit (12), einer oberen Plastifizierungsschneckenextrudereinheit (13) mit Heizmitteln (17) und einer unteren, hin- und hergehenden Einspritzschneckeneinheit (1), wobei die letztgenannte Einheit ein ebenfalls mit Heizmitteln (4) versehenes zylindrisches Gehäuse (2) umfaßt, in dem eine Schnecke (3) angeordnet ist, die in axialer Richtung hin- und hergeht und eine Füllöffnung (10) im hinteren Bereich besitzt, und eine Einrichtung (11) zur Führung des aus der oberen Plastifizierungseinheit (13) austretenden Materials zur Füllöffnung (10) der unteren Einspritzeinheit (1) durch einen Verbindungsraum (11) vorgesehen ist, der zur Umgebungsluft geschlossen und mit einem Unterdruckanschluß (20) versehen ist, dadurch gekennzeichnet, daß zur Herstellung von PVC-Produkten aus pulverförmigen Rohmaterial die Vorbehandlungseinheit (12) ein Schneckenextruder (13) des Doppelschneckentyps ist.

## Revendications

1. Méthode de moulage par injection de produits en matière plastique qui utilise une presse à injection du type en cascade à deux étages formée d'une unité supérieure d'extrudeuse à vis de plastification et d'une unité inférieure de vis-piston d'injection qui comporte une seule vis et dans laquelle la matière plastifiée est soumise au vide tandis qu'elle est introduite dans l'unité inférieure d'injection, caractérisée en ce que les produits en matière plastique sont des produits en PVC fabriqués à partir d'une matière brute en poudre, celle-ci étant soumise à un traitement de régélification pendant le transport forcé de la matière brute en poudre par l'unité supérieure d'extrudeuse à vis de plastification, qui est du type à deux vis et dans laquelle la matière brute est chauffée et amenée à un état aggloméré.

2. Méthode selon la revendication 1, caractérisée en ce que la matière est chauffée à environ 140°C pendant la prégélification.

3. Méthode selon la revendication 1 ou 2, caractérisée en ce que le vide appliqué pendant l'introduction de la matière prégélifiée dans l'ouverture de remplissage de l'unité d'injection présente une valeur de pression absolue inférieure à 50 kPa.

4. Méthode selon la revendication 3, caractérisée en ce qu'une pression absolue inférieure à 20 kPa est appliquée.

5. Appareil de moulage par injection de produits en matière plastique destiné à la mise en oeuvre de la méthode conforme à l'une quelconque des revendications 1 à 4, comportant une presse à injection du type à cascade à deux étages présentant, en guise d'unité de prétraitement (12), une unité supérieure d'extrudeuse à vis de plastification (13) munie de moyens chauffants (17) et une unité inférieure de vis-piston d'injection (1) comportant un carter cylindrique (2) et également munie de moyens chauffants (4), dans laquelle une vis (3) opère un mouvement de va-et-vient dans le sens axial, et qui a une ouverture de remplissage (10) située à l'arrière, des moyens de guidage (11) étant prévus pour la matière sortant de l'unité supérieure de plastification (13) en direction de l'ouverture de remplissage (10) de l'unité inférieure d'injection (1) par un espace d'interconnexion (11) qui est fermé vis-à-vis de l'atmosphère et qui est muni d'une liaison avec une source de vide (20), ledit appareil étant caractérisé en ce que, pour la fabrication de produits en PVC à partir de matière brute en poudre, l'unité de prétraitement (12) est formée par une extrudeuse à vis (13) du type à deux vis.

EP 0 169 231 B1

_Fig:1._

_Fig:2._

FIG: 3.